# EUROPEAN PATENT APPLICATION

(11) **EP 0 757 076 A1**
(43) Date of publication of application: **05.02.1997**
(21) Application number: 96305301.2
(22) Date of filing: 19.07.1996
(51) Int. Cl.: C08L 23/04, C08F 10/02, C08F 2/44

(54) **Process for the extrusion of polyethylene**

(30) Priority: 21.07.1995 US 1365; 28.03.1996 US 623175
(71) Applicant: UNION CARBIDE CHEMICALS & PLASTICS TECHNOLOGY CORPORATION, Danbury, Connecticut 06817-0001 (US)
(72) Inventor: Rifi, Mahmoud R., Kendall Park, New Jersey 08824 (US); Martino, Carlo P., Somerville, New Jersey 08876 (US)
(74) Representative: Allard, Susan Joyce

(57) **Abstract**

A process for extrusion comprising:
(i) blending one or more polyethylene(s), each polyethylene being made by a low pressure process and having a density equal to or greater than about 0.918 gram per cubic centimeter, with one or more saturated alicyclic hydrocarbon(s), said hydrocarbon(s) being liquid at process temperature, non-polar, essentially amorphous, and containing less than about 15 percent by weight paraffin wax, in an amount of about 0.5 to about 15 parts by weight of hydrocarbon(s) per 190 parts by weight of polyethylene(s); and
(ii) extruding the blend.

## Description

This application claims the benefit of United States Provisional Applications numbered 60/001,364 filed on July 21, 1995; 60/006,353 filed on November 8,1995; and 60/006,633 filed on November 13,1995.

### Technical Field

This invention relates to a process for the extrusion of polyethylene, which has a density equal to or greater than 0.918 gram per cubic centimeter, and a multimodal particulate polyethylene produced thereby.

### Background Information

To be commercially competitive, newly fabricated articles including films, bottles, other containers such as pails, dishpans, and laundry baskets, and container lids require improvement in one or more of numerous properties such as environmental stress cracking resistance (ESCR), impact resistance, die swell, shrinkage, and melt fracture, and the manufacturers of these articles require resins, which will exhibit improved processability. Further, in injection molding applications, there is a need to provide the capability of down-gauging to thin-walled products while retaining the advantageous properties and, at the same time, increasing the per unit speed of fabrication. In addition, the surface of the article should be smooth and essentially free of additives, which detract from appearance and other properties. Because of its toughness, strength, and chemical resistance, polyethylene has been used advantageously in the above mentioned applications, but as the molecular weight of the polyethylene increases, the processability decreases. Industry is constantly seeking a balance between processability and properties, and desirous of obtaining polyethylenes which reflect an improvement in both.

### Disclosure of the Invention

An object of this invention, therefore, is to provide an enhanced process for the extrusion of polyethylene in which both processability and the properties of the ultimate polyethylene products are improved, and a resin composition adapted for such a process. Other objects and advantages will become apparent hereinafter.

According to the present invention, the above object is met by a process for extrusion comprising:
(i) blending one or more polyethylene(s), each polyethylene being made by a low pressure process and having a density equal to or greater than about 0.918 gram per cubic centimeter, with one or more saturated alicyclic hydrocarbon(s), said hydrocarbon(s) being liquid at process temperature, non-polar, essentially amorphous, and containing less than about 15 percent by weight paraffin wax, in an amount of about 0.5 to about 15 parts by weight of hydrocarbon(s) per 100 parts by weight of polyethylene(s); and
(ii) extruding the blend.

Other embodiments of the present invention are reflected in the following resins, blends, and products:
I. A particulate polyethylene blend comprising (i) one or more polyethylene(s), each polyethylene being made by a low pressure process and having a density equal to or greater than about 0.918 gram per cubic centimeter, and (ii) one or more saturated alicyclic hydrocarbon(s), said hydrocarbon(s) being liquid at blending temperatures, non-polar, essentially amorphous, and containing less than about 15 percent by weight paraffin wax, in an amount of about 0.5 to about 15 parts by weight of hydrocarbon(s) per 100 parts by weight of polyethylene(s) wherein each polyethylene blend particle has a crystalline phase and an amorphous phase and the surface of each polyethylene blend particle is essentially free of said hydrocarbon(s).
II. A particulate homopolymer or copolymer, or blend of particulate homopolymers and/or copolymers, of ethylene and, in the case of copolymers, one or more comonomers having 3 to 12 carbon atoms, each polymer having the following characteristics:
   (i) a density of at least about 0.918 gram per cubic centimeter;
   (ii) a flow index of about 0.5 to a melt index of about 10, both in grams per 10 minutes;
   (iii) multimodal;
   (iv) each polymer particle having a crystalline phase and an amorphous phase;
   (v) the surface of each polymer particle being essentially free of additives; and
   (vi) on conversion to a film or blow molded product, exhibiting essentially no melt fracture.
III. A film or blow molded product exhibiting essentially no melt fracture consisting essentially of a homopolymer or eopolymer, or blend of homopolymers and/or copolymers, of ethylene and, in the case of copolymers, one or more comonomers having 3 to 12 carbon atoms, each polymer having the following characteristics:
   (i) a density of at least about 0.918 gram per cubic centimeter;
   (ii) a flow index of about 0.5 to a melt index of about 10, both in grams per 10 minutes;
   (iii) multimodal;
   (iv) each original polymer particle having a crystalline phase and an amorphous phase; and
   (v) the surface of each original polymer particle being essentially free of additives.
IV. A particulate homopolymer or copolymer, or blend of particulate homopolymers and/or copolymers, of ethylene and, in the case of copolymers, one or more comonomers having 3 to 12 carbon atoms, each polymer having the following characteristics:
   (i) a density of at least about 0.918 gram per cubic centimeter;
   (ii) a melt index of about 1 to about 160 grams per 10 minutes;
   (iii) multimodal;
   (iv) each polymer particle having a crystalline phase and an amorphous phase;
   (v) the surface of each polymer particle being essentially free of additives; and
   (vi) on conversion to an injection molded product being capable of
      (a) having the speed of fabrication increased by at least about 10 percent and
      (b) being down-gauged by at least 10 percent, both with essentially no loss in Gardner impact strength.
V. An injection molded product having been prepared by (i) increasing the speed of fabrication by at least about 10 percent and (ii) down-gauging by at least about 10 percent, both with essentially no loss in Gardner impact strength over a like injection molded product prepared without such increase in speed or down-gauging consisting essentially of a homopolymer or copolymer, or blend of homopolymers and/or copolymers, of ethylene and, in the case of copolymers, one or more comonomers having 3 to 12 carbon atoms, each polymer having the following characteristics:
   (i) a density of at least about 0.918 gram per cubic centimeter;
   (ii) a melt index in the range of about 1 to 160 grams per 10 minutes;
   (iii) multimodal;
   (iv) each original polymer particle having a crystalline phase and an amorphous phase; and
   (v) the surface of each original polymer particle being essentially free of additives.

The term "original polymer particle" refers to the polymer in its particulate state prior to being extruded into a film, or blow molded or injection molded.

The expression "down-gauged by at least 10 percent ... with essentially no loss in Gardner impact strength", and similar expressions in this specification, means that the thickness of the wall of the injection molded product can be reduced by at least about 10 percent with essentially no loss in Gardner impact strength. Thus, a wall of an injection molded product, for example, which is one mil thick and has a particular Gardner impact strength, can be reduced to at least 0.9 mil, and will essentially retain the same Gardner impact strength.

The expression "having the speed of fabrication increased by at least about 10 percent ... with essentially no loss in Gardner impact strength, and similar expressions in the specification, means that each injection molded product can be fabricated at a speed of fabrication at least about 10 percent greater than a like injection molded product fabricated at a slower speed, again with essentially no loss in Gardner impact strength.

### Description of the Preferred Embodiment(s)

Polyethylene, as that term may be used herein, is a homopolymer of ethylene or a copolymer of ethylene and a minor proportion of one or more alpha-olefins having 3 to 12 carbon atoms, and preferably having 4 to 8 carbon atoms, or a mixture of such homopolymers and copolymers. The mixture can be a mechanical blend or an in situ blend. Each polymer will have a crystalline phase and an amorphous phase.

The polyethylenes used in subject invention are preferably produced in the gas phase by various low pressure processes. They can also be produced in the liquid phase in solutions or slurries by conventional techniques, again at low pressures. Low pressure processes are typically run at pressures below 1000 psi whereas high pressure processes are typically run at pressures above 15,000 psi. Typical catalyst systems, which can be used to prepare these polyethylenes, are magnesium/titanium based catalyst systems, which can be exemplified by the catalyst system described in United States patent 4,302,565 (heterogeneous polyethylenes); vanadium based catalyst systems such as those described in United States patents 4,508,842 (heterogeneous polyethylenes) and 5,332,793; 5,342,907; and 5,410,003 (homogeneous polyethylenes); a chromium based catalyst system such as that described in United States patent 4,101,445; a metallocene catalyst system such as that described in United States patents 4,937,299 and 5,317,036 (homogeneous polyethylenes); or other transition metal catalyst systems. Many of these catalyst systems are often referred to as Ziegler-Natta catalyst systems. Catalyst systems, which use chromium or molybdenum oxides on silica-alumina supports, are also useful. Typical processes for preparing the polyethylenes are also described in the aforementioned patents. Typical in situ polyethylene blends and processes and catalyst systems for providing same are described in United States Patents 5,371,145 and 5,405,901.

The polyethylene(s) are particulate and can be in the form of porous granules or pellets. The porous granules of each polyethylene generally have a diameter in the range of about 25 microns to about 2500 microns. Regardless of its form, the polyethylene has a density equal to or greater than 0.918 gram per cubic centimeter, preferably in the range of 0.920 to 0.970 gram per cubic centimeter. High density polyethylene, which has a density equal to or greater than 0.940 gram per cubic centimeter, is particularly useful in the process of this invention. Linear low density and medium density polyethylenes are also useful in subject process. Preferred densities for injection molding are greater than 0.918 gram per cubic centimeter and for blow molding are greater than 0.930 gram per cubic centimeter. If the polyethylene is in pellet form, the blending step is carried out with the polyethylene in the molten state. In any case, the blending can take place in a blender or extruder adapted for blending these two components.

The molecular weight of the polyethylene can be in the range of about 20,000 to about 1,000,000 and is preferably in the range of 25,000 to about 500,000. It is understood that there is a generally inverse linear correspondence between molecular weight and flow index and melt index. The flow index can be greater than about 0.1 gram per 10 minutes, and is preferably in the range of about 2 to about 80 grams per 10 minutes. For the purpose of blow molding and film extrusion, a flow index of about 0.5 to a melt index of about 10 and preferably a flow index of about 1 to about a melt index of 8, all grams per 10 minutes, is desirable. The melt index can be in the range of about 1 to about 160 grams per 10 minutes and is preferably in the range of about 3 to about 150 grams per 10 minutes for the purpose of injection molding. And for injection molding, molecular weights can range from about 20,000 to about 100,000 and are preferably in the range of about 25,000 to about 85,000. Melt index is determined under ASTM D-1238, Condition E. It is measured at 190°C and 2.16 kilograms and reported as grams per 10 minutes. Flow Index is determined under ASTM D-1238, Condition F. It is measured at 190°C and 21.6 kilograms and reported as grams per 10 minutes. Polydispersity (Mw/Mn) can be greater than about 1.5, and is usually in the range of about 3 to about 80.

The portion of the copolymer attributed to the alpha-olefin comonomer(s) can be in the range of about 1 to about 50 percent by weight based on the weight of the copolymer and is preferably in the range of about 2 to about 12 percent by weight based on the weight of the copolymer. There can be more than one alpha-olefin comonomer, but there is usually no more than one or two. The balance of the copolymer is ethylene. The preferred comonomers are 1-butene, 1-hexene, 4-methyl-1-pentene, and 1-octene although the number of carbon atoms can be in the range of 3 to 12, if desired. A characteristic of the subject polyethylene is multimodality, preferably bimodal or trimodal.

A technique for increasing the modality of the polyethylene and improving other properties thereof is to introduce various additives into the polyethylene. The preferred additive is a saturated alicyclic hydrocarbon. On addition of the hydrocarbon, the polyethylene or mixture of polyethylenes increase their modality, for example, from monomodal to bimodal and from bimodal to trimodal. Thus, the post-blend polyethylene(s) can be characterized as multimodal.

As noted above, the hydrocarbons are saturated alicyclic hydrocarbons. They are unsubstituted. Alicyclic hydrocarbons are mixtures of aliphatic and cycloaliphatic hydrocarbons. The hydrocarbons are generally liquid at ambient temperatures; are liquid at process temperature, non-polar, essentially amorphous, and contain less than 15 percent by weight paraffin wax, preferably less than one percent by weight paraffin wax. No paraffin wax would be most preferable, but this is not considered practical or necessary for the composition applications. The liquid hydrocarbons can have a viscosity in the range of about 200 to about 1000 SUS (Saybolt Universal Seconds) at 100°F (37.8°C) and preferably have a viscosity in the range of about 250 to about 800 SUS at 100°F. Examples of these hydrocarbons are Kaydol® 350, 380, and 550 hydrocarbons. Other examples are Tufllo® 6056 and 6026 hydrocarbons. It is noted that the Tufllo® hydrocarbons do not comply with the FDA regulation for food contact. Kaydol® 350 hydrocarbon is reported to contain 11.8 percent by weight paraffin wax and Kaydol® 550 hydrocarbon is reported to contain less than one percent by weight paraffin wax. The molecular weight of these hydrocarbons is in the range of about 200 to about 5000. The hydrocarbon(s) can be present in the mixture of polyethylene(s) and hydrocarbon(s) in an amount of about 0.5 to about 15 parts by weight of hydrocarbon(s) per 100 parts by weight of polyethylene(s), and are preferably present in an amount of about 3 to about 12 parts by weight. These values refer to total hydrocarbons and total polyethylenes. In any case, the amount of hydrocarbon(s) should be such that the surface of each particle of polyethylene resin is essentially free of these hydrocarbon(s). The hydrocarbon(s) are also miscible with the polyethylene at process temperatures, and, in the suggested proportions, reside in the amorphous phase of the polyethylene. Kaydol® 350 hydrocarbon has a viscosity of 350 SUS at 100° F; a molecular weight of 800; and a density of 0.877 gram per cubic centimeter. Kaydol® 380 hydrocarbon has a viscosity of 380 SUS at 100° F; a molecular weight of 900; and a density of 0.885 gram per cubic centimeter. Tufflo® 6056 hydrocarbon has a viscosity of 460 SUS at 100° F; a molecular weight of 720; and a density of 0.8692 gram per cubic centimeter.

For the purposes of this specification, extrusion processes shall be considered to include conventional extrusion processes such as blown tubular film extrusion (see discussion in United States Patent 4,814,135), and pipe and sheet extrusion, and blow molding, injection molding, rotational molding, and slot casting.

In the case of porous granular polyethylene, the hydrocarbon(s) are usually dry blended with the polyethylene(s) prior to extrusion (preblending), but the hydrocarbon(s) and resin can be blended in the extruder itself under melt processing conditions, if desired. Preblending is preferable, however, since it shortens the mixing time and is a key factor in achieving uniform distribution of the hydrocarbon in the resin. In the case of pelletized polyethylene, the polyethylene is in the molten state when the blending is initiated. The polyethylene(s) mix readily with the hydrocarbon(s) without the use of heat except, as noted, when it is in pelletized form. Preblending can be carried out at ambient or elevated temperatures, however. Mixers and extruders useful in carrying out the process of the invention are conventional off-the-shelf equipment. Mixers, which can be used to blend the resin and the liquid hydrocarbon, are, for example, Banbury^{TM} or other internal mixers, two roll mills, Baker Perkins^{TM} or similar sigma blade mixers, ribbon blenders, and Henschel^{TM} mixers. As noted, extruders can also be used to mix the resin and the hydrocarbon(s). Blending can also be effected by injecting the hydrocarbon(s) into fluidized polyethylene(s). Another preferred blending technique is to add the hydrocarbon(s) to the polymerization reactor. The advantage of this technique is improved homogeneity of the blend with an attendant improvement in many of the improved properties achieved in dry or melt blending. It will be understood that sufficient hydrocarbon(s) have to be added to the reactor to provide the amount set forth above for the blend. The addition of the hydrocarbon(s) to the reactor increases the average particle size of the resin; decreases bulk density slightly; decreases fines; has no apparent effect on the removal of residual comonomer; increases flow index; decreases density; and reduces static.

Typically, the resin and the hydrocarbon can be dry blended in a ribbon blender. This is accomplished by charging the resin to the blender along with the appropriate stabilizer package. The hydrocarbon is then added by pouring it over the resin. Agitating for a period of 30 minutes yields a uniform blend of resin and hydrocarbon that is free flowing and not sticky up to about 20 percent by weight hydrocarbon. Blending is carried out at room temperature. A second method is effected with a high speed Henschel^{TM} mixer having an agitator with four blades. The hydrocarbon is added slowly over a period of several minutes and allowed to mix for 15 minutes. This method is also carried out at room temperature. A third method is to add the hydrocarbon to a fluidized bed of powdered resin. By heating the resin to about 80 degrees C with nitrogen passing through the resin at a rate sufficient to fluidize the bed, the hydrocarbon can be sprayed onto the bed using a modified cone "airless" type spray nozzle mounted inside the bed container. The hydrocarbon is heated to about 80 degrees C so that the temperature of the bed is not reduced. Blending can also be accomplished with a material handling auger or conveyor using the same type of spray nozzle. This should be done in a nitrogen atmosphere, but can be effected at room temperature. Finally, molten resin can be blended with the hydrocarbon using a calibrated compounding extruder screw and additive metering pump. The molten blend is then cooled and pelletized.

Extruders and processes for extrusion are described in United States patents 4,169,679; 4,814,135; 4,857,600; 5,076,988; and 5,153,382. Examples of various extruders are a single screw type such as one modified with a blown film die and air ring and continuous take off equipment; a blown film extruder; and a slot cast extruder. Twin screw extruders can also be considered. A typical single screw type extruder can be described as one having a hopper at its upstream end and a die at its downstream end. The hopper feeds into a barrel, which contains a screw. At the downstream end, between the end of the screw and the die, is a screen pack and a breaker plate. The screw portion of the extruder is considered to be divided up into three sections, the feed section, the compression section, and the metering section, and multiple heating zones from the rear heating zone to the front heating zone, the multiple sections and zones running from upstream to downstream. If it has more than one barrel, the barrels are connected in series. The length to diameter ratio of each barrel is in the range of about 16:1 to about 30:1. The extrusion can take place at temperatures in the range of about 160 to about 270 degrees C, and is preferably carried out at temperatures in the range of about 180 to about 240 degrees C. In wire coating, where the material is crosslinked after extrusion, the die of the crosshead feeds directly into a heating zone, and this zone can be maintained at a temperature in the range of about 130°C to about 260°C, and preferably in the range of about 170°C to about 220°C.

A description of typical injection molding apparatus can be found in the Injection Molding Handbook, edited by Rosato et al, published by Van Nostrand, New York, 1986, pages 10 and 11, and Injection Molding, Rubin, published by John Wiley & Sons, New York, 1972, pages 5 and 6. Typical conditions are described in United States Patent 4,390,677.

A description of a typical blow molding apparatus can be found in the Blow Molding Handbook, edited by Rosato et al, published by Oxford University Press, New York, 1989. Typical conditions are described at pages 530 to 535.

Advantages of the blend of polyethylene(s) and hydrocarbon(s) are that the processability and one or more properties of the ultimate product (as measured on films or plaques) are improved when the blend is compared with the same or similar polyethylene(s) having, for example, similar densities, melt indices, and/or melt flow ratios, without the hydrocarbon(s), i.e., there is essentially no bleeding; there are essentially no hydrocarbon(s) on the surface of each polyethylene particle or on the surface of the articles of manufacture produced by the extrusion of the polyethylene(s); the ESCR and the impact resistance are improved; die swell, diameter swell, shrinkage, and modulus (when desirable) are reduced; surfaces are smooth; and gels are reduced in in situ blends. Further, there is improvement in extensional viscosity; tangent delta (enhanced chain entanglement/less orientation/higher dart drop); notched Izod; beta transition temperature; spiral flow; and shear thinning. The accompanying multimodality is considered at least partially responsible for improved processability, lower density, and lower modulus.

In addition, there is essentially no melt fracture in film and blow molded products, and, in injection molded products, there can be an increase in the speed of fabrication of at least about 10 percent, and a capability of down-gauging injection molded products by at least about 10 percent, with essentially no loss in Gardner impact strength.

Conventional additives can be added to the hydrocarbon modified polyethylene during the preblending step and/or the extrusion step, and, in some cases, directly to the polymerization reactor. One method for addition involves first blending the desired additive(s) with the hydrocarbon(s) and then blending the mixture with the polyethylene(s). Stabilization packages are advantageously added in this way. The amount of additive is usually in the range of about 0.01 to about 60 percent by weight based on the weight of the resin. Useful additives are antioxidants, ultraviolet absorbers, antistatic agents, pigments, dyes, fillers, slip agents, fire retardants, plasticizers, processing aids, lubricants, stabilizers, smoke inhibitors, viscosity control agents, vulcanizing agents, crosslinking agents, crosslinking catalysts, and crosslinking boosters.

The patents mentioned in this specification are incorporated by reference herein.

The invention is illustrated by the following examples.

### Example 1

A copolymer of ethylene and 1-hexene having a flow index of 3 to 5 grams per 10 minutes and a density of 0.953 gram per cubic centimeter is blended with 5 percent by weight (based on the weight of the copolymer) of a saturated alicyclic hydrocarbon, which is liquid at extrusion temperature, non-polar, essentially amorphous, and contains less than about 15 percent by weight paraffin wax. The hydrocarbon has a viscosity of 350 SUS at 100 degrees F; a density of 0.877 gram per cubic centimeter; and a molecular weight of 800 (it is presently sold as Kaydol® 350 white oil). It also complies with FDA regulations for food contact.

Note: The saturated alicyclic hydrocarbon will be referred to in the examples as SAHC.

The blend is found to be bimodal. Further, the blend is particulate and the surface of each particle is found to be essentially free of the SAHC.

The blend is extruded into a film on an Alpine^{TM} extrusion line having a die size of 100 millimeters; a die gap of 1 millimeter; a screw size of 50 millimeters; and a frost line height (FLH) of about 7 to 10 times the die size, i.e., about 90 centimeters. The blow-up ratio is 4:1. The melt temperature is about 400 degrees F. The extrusion rate is 8 pounds per hour-inch of die circumference.

The properties of the blend and film are set forth in Table I:

**Table I**

| **property** | **value** |
|---|---|
| flow index (grams per 10 minutes) | 5.6 |
| melt index (grams per 10 minutes) | 0.21 |
| melt flow ratio | 27.7 |
| density (gram per cubic centimeter) | 0.953 |
| film gauge (mil) | 0.45 |
| Elmendorf tear (grams per mil) | |
| machine direction | 25 |
| transverse direction | 35 |
| dart drop (grams) | 105 |
| tensile strength (psi) | |
| machine direction | 8500 |
| transverse direction | 7500 |
| elongation at break (percent) | |
| machine direction | 270 |
| transverse direction | 320 |
| secant modulus, 1 percent (psi) | |
| machine direction | 123,000 |
| transverse direction | 131,500 |
| | |
| blocking at 60 degrees C (grams) | |
| 24 hours | 4.9 |
| | (no blocking) |
| 1 week | 4.3 |
| | (no blocking) |
| 1 month | 4.5 |
| | (no blocking) |
| melt fracture | none |

It is further found that the blend has a higher extensional viscosity than the copolymer per se. The extensional viscosity is measured using the Extensional Rheology test as follows:

The Extensional Rheology test measures the strain hardening behavior, and evidence of strain hardening is determined by measuring extensional viscosity. The test is carried out as follows:

Each sample is prepared first by compression molding loose polyethylene resin into a plaque 1.52 millimeters thick. In order to relax any stresses or orientation in the polymer, the sample is further compressed for several hours at 180° C to 1.27 millimeters thickness under vacuum. An annular section is punched out 1 centimeter across, and the difference between inner and outer diameters for each sample is 2.54 millimeters.

As noted above, evidence of strain hardening in each sample is determined by measuring extensional viscosity, which is calculated as the quotient between the extensional stress and the extension rate of the sample. Each sample is placed between two hook clamps, which are attached to a commercial servo-controlled tensile machine modified for handling molten samples. One clamp moves relative to the other at programmed speeds. The apparatus is capable of developing up to 200 inches per minute controlled crossed-head speed with a displacement of 20 inches. Special clamping is incorporated to allow a 0 to 500 grams load cell to be used for the tensile stress measurement.

Each sample is heated in a hot oil bath to 150° C before stretching. To establish a constant extensional deformation rate, an exponentially increasing stretching speed is needed, and this is achieved electronically using a signal generator. Each sample maintains a fairly uniform cross-section during stretching.

The results of the stretching experiment are collected as force on the sample as a function of crosshead displacement. Using time as the independent variable can lead to large errors in the stress if the crosshead does not follow exactly the chosen exponential path. A data sheet for the recording of essential information and a simple program are used to reduce the data to extensional viscosity versus time. These data are then plotted in the classical fashion: Log of extensional viscosity versus log of time with rate as a parameter.

It can be seen that samples containing significant inter-chain interactions exhibit strain hardening, evidenced by an upward inflection in viscosity-time function at high strain rates. The level of strain hardening of one sample is higher than that of another sample. This correlates with the amount of SAHC used, i.e., the higher the SAHC level, the greater the strain hardening; however, an upper limit must be observed as will be noted below. Samples do not show strain hardening when no SAHC is used.

Strain hardening is believed to be caused by intermolecular entanglements which lengthen the relaxation time of a polymer melt subjected to strain. Polymers that exhibit strain hardening are better suited to certain types of extrusion apparatus , e.g., film blowing, than those that do not.

The blend also has a lower glass transition temperature as measured via Differential Scanning Calorimeter by Dynamic Mechanical Analysis (DMA). The DMA measurement is described in Murayama, Dynamic Mechanical Analysis of Polymer Material, published by Elsvere, page 36.

### Example 2

An in situ blend of two copolymers of ethylene and 1-hexene is prepared in two fluidized bed reactors with the following catalyst:

A titanium trichloride catalyst precursor is prepared in a 1900 liter vessel equipped with pressure and temperature controls and a turbine agitator. A nitrogen atmosphere (less than 5 ppm H₂O) is maintained at all times.

1480 liters of anhydrous tetrahydrofuran (THF) containing less than 40 ppm H₂O are added to the vessel. The THF is heated to a temperature of 50 degrees C, and 1.7 kilograms of granular magnesium metal (70.9 gram atoms) are added, followed by 27.2 kilograms of titanium tetrachloride (137 mols). The magnesium metal has a particle size in the range of from 0.1 to 4 millimeters. The titanium tetrachloride is added over a period of about one-half hour.

The mixture is continuously agitated. The exotherm resulting from the addition of titanium tetrachloride causes the temperature of the mixture to rise to approximately 72 degrees C over a period of about three hours. The temperature is held at about 70 degrees C by heating for approximately another four hours. At the end of this time, 61.7 kilograms of magnesium dichloride (540 mols) are added and heating is continued at 70 degrees C for another eight hours. The mixture (solution) is then filtered through a 100 micron filter to remove undissolved magnesium dichloride and unreacted magnesium (less than 0.5 percent by weight).

100 kilograms of fumed silica having a particle size in the range of from 0.1 to 1 microns are added to the mixture prepared above over a period of about two hours. The mixture is stirred by means of a turbine agitator during this time and for several hours thereafter to thoroughly disperse the silica in the solution. The temperature of the mixture is held at 70 degrees C throughout this period and a nitrogen atmosphere is maintained at all times.

The resulting slurry is spray dried using an 8-foot diameter closed cycle spray dryer equipped with a rotary atomizer. The rotary atomizer is adjusted to give catalyst particles with a D50 of 12 microns. The scrubber section of the spray dryer is maintained at approximately minus 4 degrees C.

Nitrogen gas is introduced into the spray dryer at an inlet temperature of 140 degrees C and is circulated at a rate of approximately 1700 kilograms per hour. The catalyst slurry is fed to the spray dryer at a temperature of about 35 degrees C and a rate of 90 to 95 kilograms per hour, or sufficient to yield an outlet gas temperature of approximately 100 degrees C. The atomization pressure is slightly above atmospheric. Discrete spray dried catalyst precursor particles are formed.

The spray dried catalyst contains 2.5 weight percent Ti, 6.3 weight percent Mg, and 29.2 weight percent THF. The particles have a D10 of 8 microns, a D50 of 12 microns, and a D90 of 18.6 microns as determined by means of a Leeds and Northrup Microtrac^{TM} particle size analyzer using a dodecane solvent.

The discrete catalyst precursor particles are mixed with mineral oil under a nitrogen atmosphere in a 400 liter vessel equipped with a turbine agitator to form a slurry containing approximately 28 weight percent of the solid catalyst precursor. A 50 weight percent solution of tri-n-hexylaluminum in mineral oil is added and the slurry is stirred for one hour. The tri-n-hexylaluminum solution is employed in an amount sufficient to provide 0.2 mol of tri-n-hexylaluminum per mol of THF in the catalyst. A 30 weight percent solution of diethylaluminum chloride (DEAC) in mineral oil is then added and the mixture is stirred for another hour. The DEAC is employed in an amount sufficient to provide 0.45 mol of DEAC per mol of THF in the catalyst.

Ethylene is copolymerized with 1-hexene in a fluidized bed reactor. The total pressure in each reactor is 300 psia. Each polymerization is continuously conducted after equilibrium is reached. The temperature is 87 degrees C; the ethylene partial pressure is 130 psi; the hydrogen/ethylene molar ratio is 0.120; the 1-hexene/ethylene molar ratio is 0.125; and the aluminum/titanium atomic ratio is 36. This is the final Al/Ti atomic ratio in the reactor, and includes the aluminum introduced in the modifier step.

Polymerization is initiated in the first reactor by continuously feeding the catalyst precursor and cocatalyst into a fluidized bed of polyethylene granules together with ethylene, 1-hexene, and hydrogen. The cocatalyst (TEAL) is first dissolved in isopentane (1 to 5 percent by weight cocatalyst). The product blend is continuously removed.

The same SAHC as the one used in example 1 is added to the first reactor approximately 2 feet above the distributor plate. It is first dried to a maximum water content of 10 ppm. An existing feed stream is used to feed the SAHC to the reactor. A low injection point allows the SAHC as much time as possible to mix with the copolymer before it is carried into the recycle system. The SAHC is initially fed at a rate of 1 percent by weight of the copolymer. It is then increased to 1.7, 3, 5, 7, 10, and 20 percent by weight with samples of the in situ blend being collected at each level for analysis. As the amount of SAHC is increased, the amount of copolymer produced in the second reactor is decreased. 1-hexene is added to each reactor in amounts sufficient to control the density of the copolymer and hydrogen is added to each reactor in amounts sufficient to control the molecular weight (see above). Thus, the copolymer produced in the first reactor has a density in the range of 0.920 to 0.929 gram per cubic centimeter and the final copolymer produced in the second reactor has a density in the range of 0.942 to 0.949 gram per cubic centimeter. A granular resin is produced in both reactors having an average particle size of 0.01 to 0.02 inch, and the resin appears to have less fines than the same resin produced without the SAHC. It is observed that the granular resin is free flowing, and the surface of each particle is essentially free of SAHC, even at high SAHC concentrations; the level of static is reduced significantly; and the operability of each reactor is much improved.

The granular resin is discharged from the second reactor, stabilized with antioxidants, and compounded. Compounding of the copolymer and SAHC with anti-oxidant, calcium stearate, and zinc stearate can be accomplished with a Prodex^{TM} single screw extruder. The extruder uses a double compounding 2.5 inch screw with a length to diameter ratio of 30:1. Stranding and pelleting is achieved through a 16 strand die head, water bath, air knife, and strand cutter. The molten polymer composition is passed through a screen pack with a series of screens ranging from 20/60/20 mesh to 20/200/20 mesh before going through the die head for stranding. The melt temperature is 480 to 510 degrees F; the head pressure is 3500 to 4000 psi; the drive amps is 47 to 54; and the output rate is 60 to 70 pounds per hour.

It is found that the resin is trimodal by size exclusion chromatography; polydispersity is greater than 100; the average molecular weight is about 29,000; and the density is 0.948 gram per cubic centimeter.

The compounded resin is extruded into films on an Alpine^{TM} extrusion line as described in example 1. The films are 1, 0.4, and 0.5 mil in thickness.

A resin is prepared in the same manner as the above resin except that the SAHC is not added. The resin is compounded and extruded as above into the same size films, i.e., 1, 0.4, and 0.5 mil films, without the SAHC displayed an FAR (film appearance rating) of minus 40 to minus 50 while a film with 1.7 percent by weight SAHC displayed an FAR of plus 30 to plus 40. FAR is a measure of gel content in film. The gels have a negative effect on the visual appearance of the film. The higher the number of gels, the lower the FAR. In addition, the bubble stability, as measured by the speed of the line in feet of film per minute, is much higher in the resin with the SAHC than the one without, e.g., 180 feet per minute for the resin without the SAHC vs 250 feet per minute for a resin with 1.7 percent by weight SAHC.

The SAHC containing film also displays higher dart drop than films without the SAHC. Dart drops of SAHC containing resin as measured on 0.5 films are 295 to 320 grams and dart drops of resins which do not contain SAHC are much lower, i.e., 200 to 240 grams. In addition, the SAHC containing film displays a glossier surface and better clarity than films, which do not contain the SAHC.

Compounded resin samples containing 2 and 5 percent by weight SAHC are tested for printability. The samples are extruded into films using a commercial extrusion line having a grooved 55 millimeter screw with a 2 1/2 inch diameter. An 80 mesh screen is used and the output of film is about 100 pounds per hour. Before printing, the films are treated with a corona discharge under normal dosage. A water based Poly-185^{TM} printing ink produced by Graphic Sciences is used. On line printing of both film samples is successful as evidenced by the good adhesion of the ink to the film. Such good adhesion is consistent with the conclusion that there is essentially no SAHC on the surface of the film.

A compounded resin sample without SAHC is tested in the same manner with the same good adhesion of ink to film. Thus, insofar as printability is concerned, films with and without SAHC are equivalent.

### Example 3

The SAHC of example 1 is blended with a copolymer of ethylene and 1-hexene having a flow index of 33 grams per 10 minutes and a density of 0.953 gram per cubic centimeter. The blend is compression molded into 24 mil plaques. The plaques are conditioned at 25 degrees C, 0 degrees C, and minus 38 degrees for 48 hours, and tested for Gardner Impact Strength. A 2 pound weight is used as the falling weight. When compared with the same plaques without the SAHC, the plaques containing the SAHC have a higher Gardner Impact Strength.

### Example 4

Two copolymers of ethylene and 1-hexene produced with the same catalyst are compared, the first blended with 5 percent by weight of the example 1 SAHC and the second without SAHC. Both the blend and the second copolymer have the same density, i.e., 0.941 gram per cubic centimeter. It is observed that the SAHC raises the density and flow index of the copolymer. The blend has a flow index of 7 grams per 10 minutes (original copolymer has a flow index of 5 grams per 10 minutes) and the second copolymer has a flow index of 10 grams per 10 minutes. The molecular weight of the blend is slightly higher than that of the second copolymer. It is known that, generally speaking, the higher the molecular weight, the more prone the resin is to exhibit melt fracture. Both the blend and the second copolymer are blow molded on a 16 ounce Impco^{TM} blow molding machine having a 2 inch screw with a length to diameter ratio of 24:1. 55 gram round bottom bottles are produced. A comparison of the bottle properties is set forth in Table II.

**Table II**

| **bottle properties** | **copolymer + SAHC** | **copolymer w/o SAHC** |
|---|---|---|
| density (g/cc) | 0.941 | 0.941 |
| flow index (g/10 min) | 7 | 10 |
| drop height (feet) | 14 plus | 10 |
| diameter swell (inches) | 3.8 | 4.1 |
| ESCR (1/3 full) | did not fail > 60 days | did not fail > 60 days |
| melt fracture | none | noticeable |

### Example 5

Two copolymers of ethylene and 1-hexene produced with the same catalyst are compared, the first blended. with 3 percent by weight of the example 1 SAHC and the second without SAHC. Both the blend and the second copolymer are compression molded into plaques as in example 3 and blow molded on a 16 ounce Impco^{TM} blow molding machine having a 2 inch screw with a length to diameter ratio of 24:1. 55 gram round bottom bottles are produced. Variable conditions and a comparison of properties are set'forth in Table III.

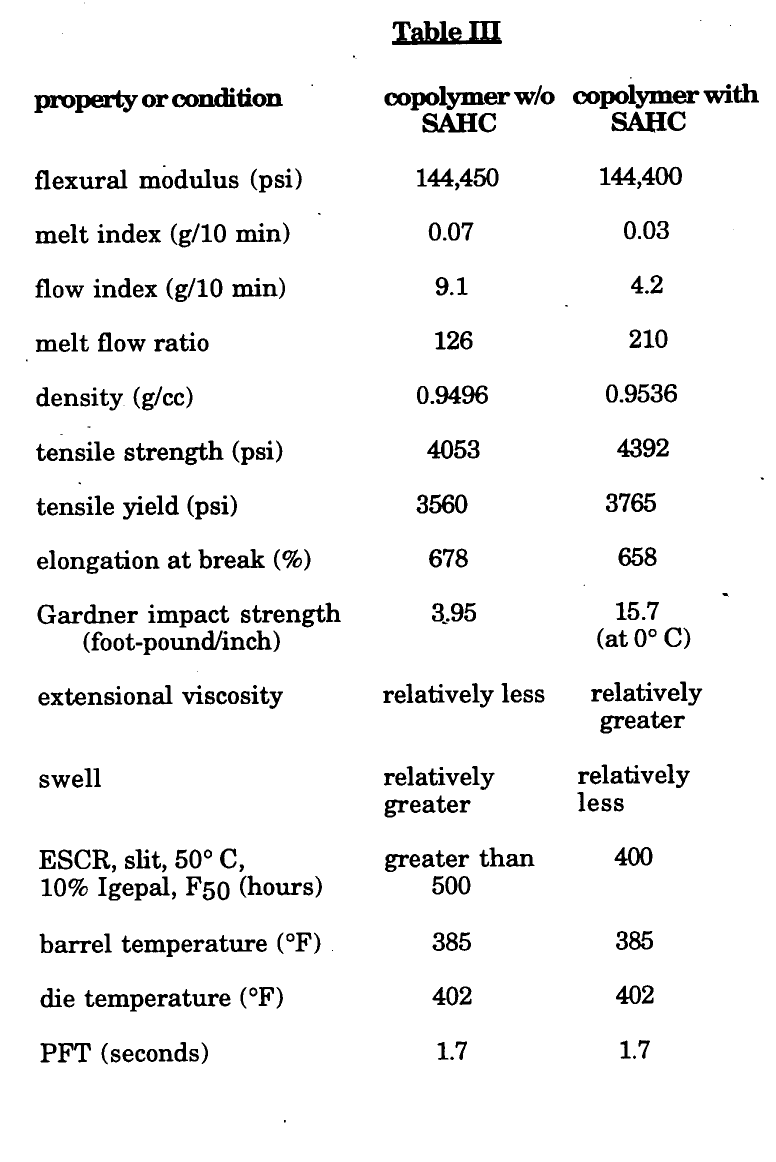

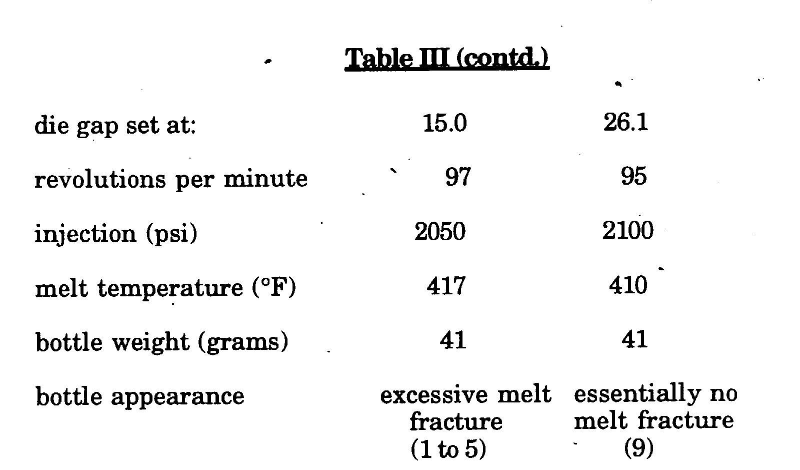

### Example 6

Three copolymers of ethylene and 1-butene produced with the same catalyst are compared, the first blended with 5 percent by weight of the example 1 SAHC; the second without SAHC; and the third without SAHC. Both the blend and the second and third copolymers are injection molded into dishpans on a 20 ounce reciprocating injection molding machine having a 300 ton clamp pressure and a screw with a length to diameter ratio of 20:1.

The first and second copolymers have an initial density of 0.926 gram per cubic centimeter. With respect to the first copolymer, the properties are prior to blending with the SAHC. The third copolymer has a density of 0.926 gram per cubic centimeter. Other properties of the three copolymers are set forth in Table IV A. Using a special graduated mold, it is also found that the first copolymer with SAHC has improved spiral flow over the second polymer without SAHC.

Using the first copolymer with SAHC and the third copolymer without SAHC, small and large lids are injection molded as above. Evaluation of the lids is set forth in Table IV B. It is further observed that the lids prepared with the first polymer with SAHC can be downgauged by about 10 percent without loss in impact resistance.

**Table IV A**

| **property** | **first copolymer with SAHC** | **second copolymer w/o SAHC** | **third copolymer w/o SAHC** |
|---|---|---|---|
| initial melt index (g/10 min) | 33 | 33 | 50 |
| final melt index (g/10 min) | 37 | 33 | 50 |
| minimum psi needed to fill injection mold | 950 | 1100 | 800 |
| Gardner impact resistance at minus 40° C (inches per pound) | 600 | 540 | 45 |
| shrinkage (%) | 0 | 2.5 | 2.5 |
| ESCR, no slit, 25° C, 10% Igepal, F₅₀ (hours) | 109.1 | 94.9 | 11.6 |

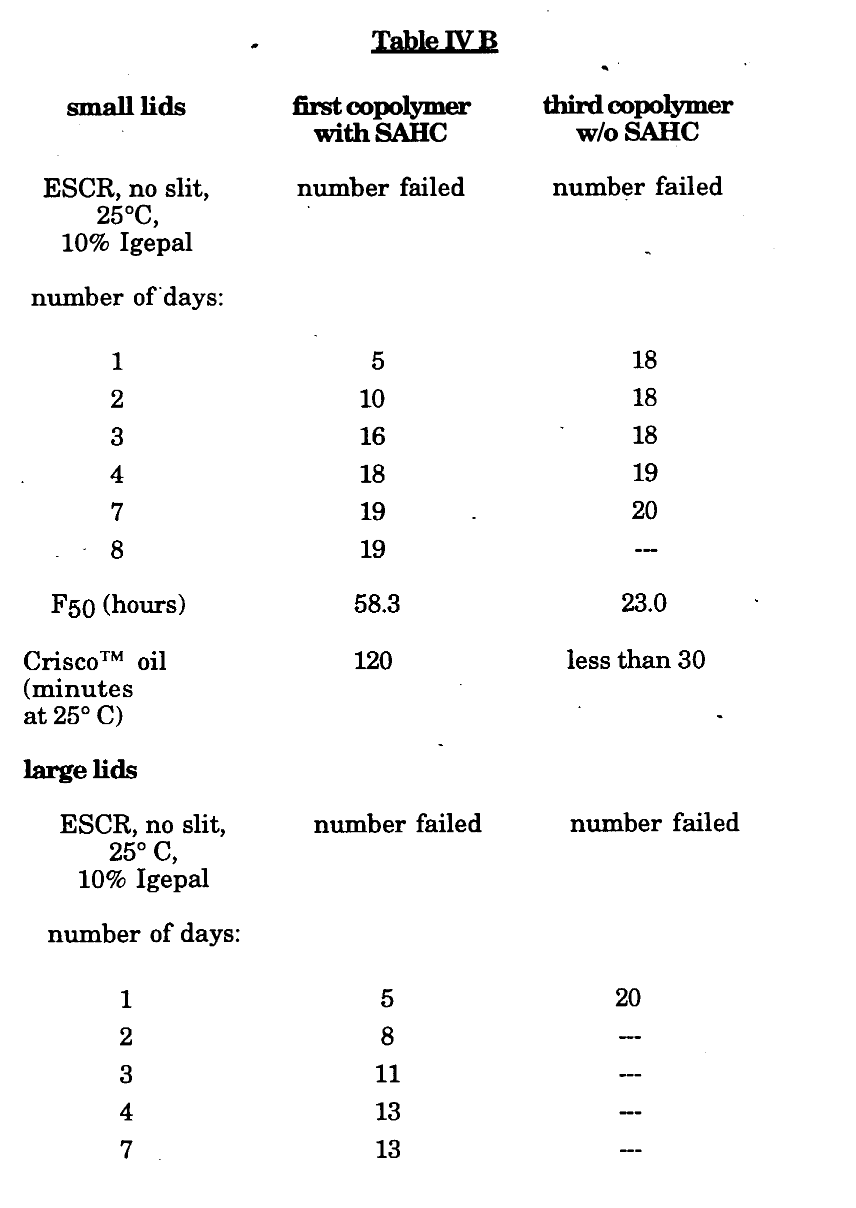

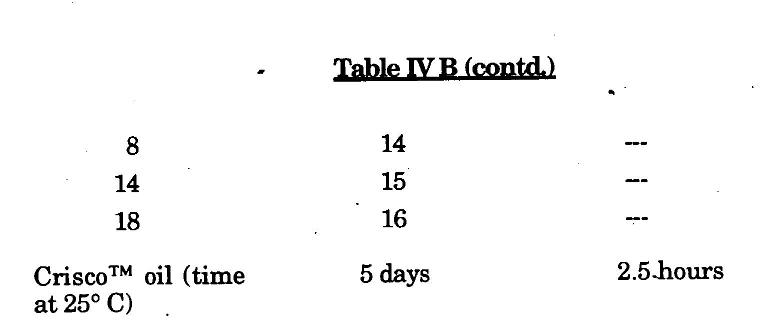

The Crisco^{TM} lid test is an indicator of the resins ability to withstand degradation when used with certain products. Since many lids are used in the presence of oils or fats, the test gives a very good indication of a lid's ability to resist cracking. In the test, the lid is bent back over itself and held together with a clip. The lid is then immersed in the Crisco^{TM} oil and allowed to stand. The amount of time is recorded from the time of immersion until the first crack appears along the fold. This can vary from minutes to days depending on the resin.

### Example 7

Film production for the comparison of single site metallocene catalyzed resin with and without the SAHC of example 1 is carried out on a film extrusion line, which includes a 1 1/2 inch screw having a length to diameter ratio of 24:1. Molten resin is extruded through a 3 inch SANO^{TM} die with a die gap of 80 mil. The film is blown to a 2:1 blow up ratio to obtain a 1 mil film. The line has a 12 foot nip roll height and is run at a rate of 27 to 30 pounds per hour. The line uses an 8 to 9 inch frost line height at a windup speed of 117 to 120 feet per minute. Variable conditions and results are set forth in Table V. It is also observed that with the SAHC containing resin, the hot tack strength is higher and the heat sealing temperature is lower.

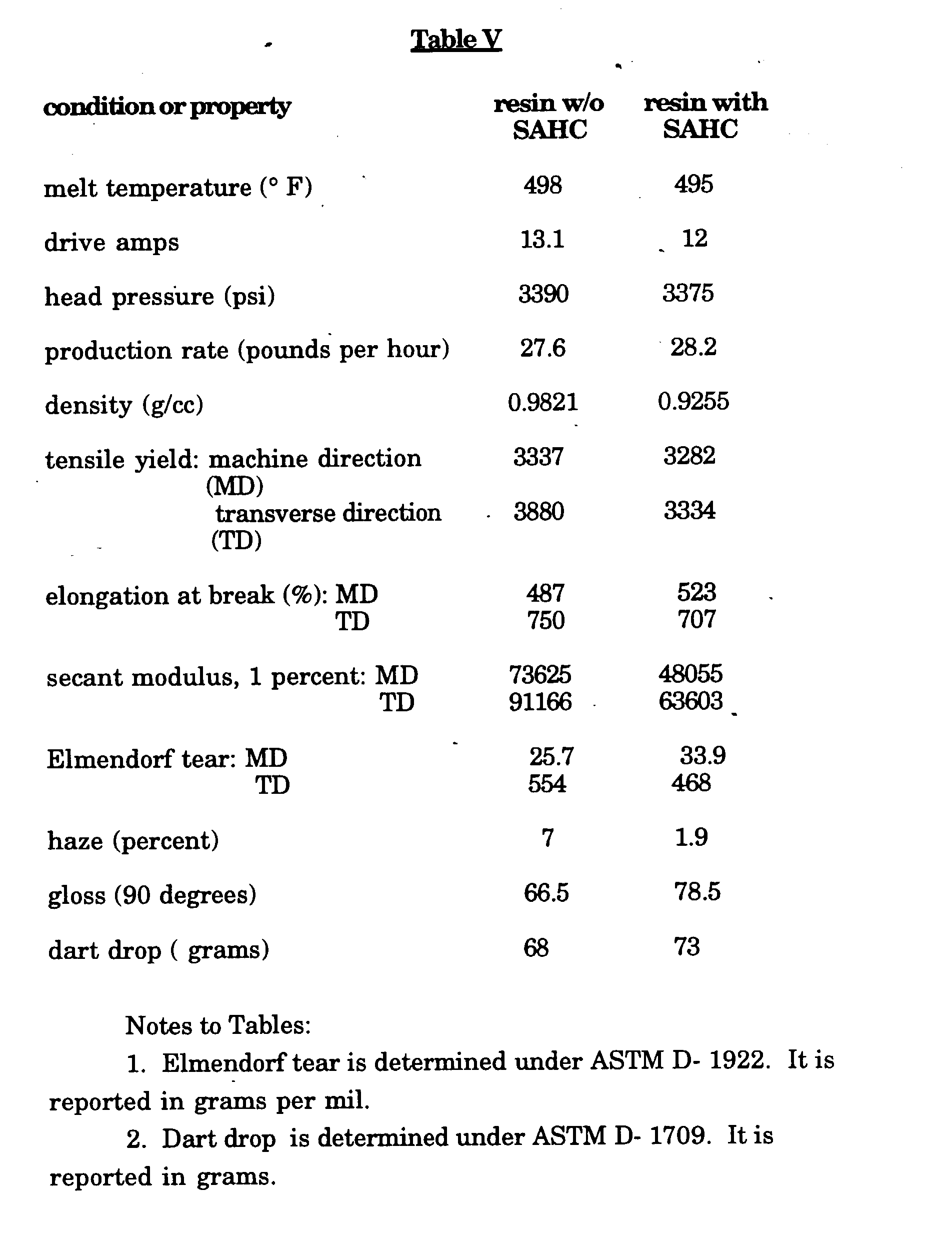

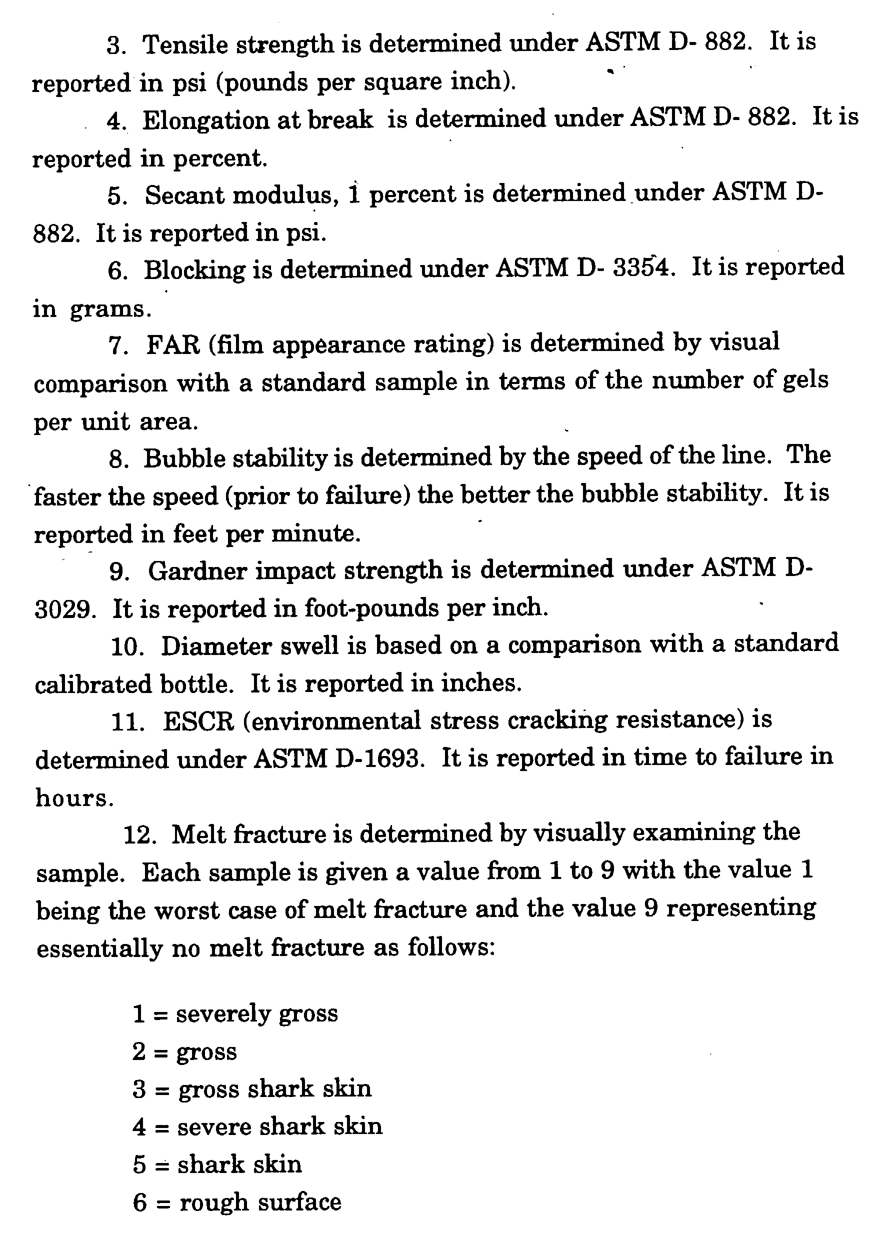

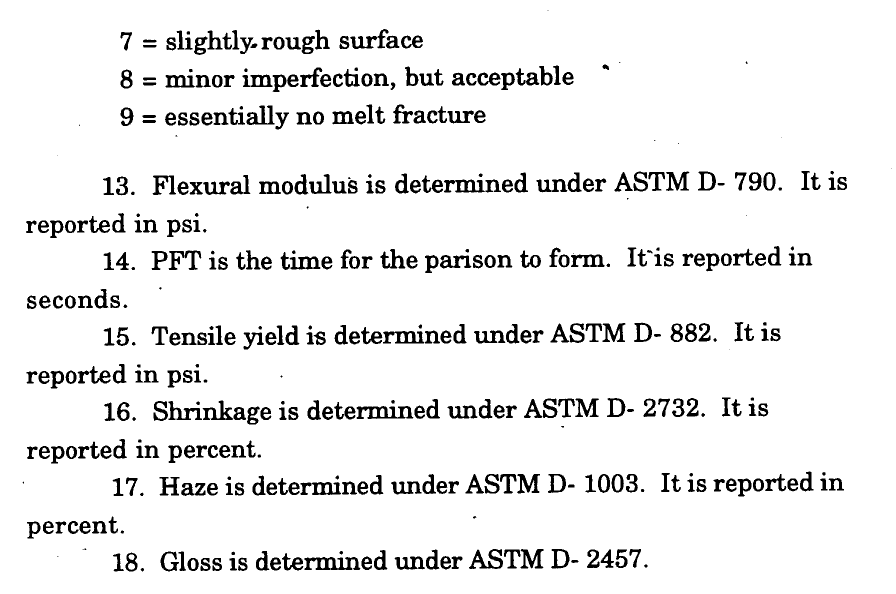

## Claims

1. A process for extrusion comprising:
(i) blending one or more polyethylene(s), each polyethylene being made by a low pressure process and having a density equal to or greater than 0.918 gram per cubic centimeter, with one or more saturated alicyclic hydrocarbon(s), said hydrocarbon(s) being liquid at process temperature, non-polar, essentially amorphous, and containing less than 15 percent by weight paraffin wax, in an amount of from 0.5 to 15 parts by weight of hydrocarbon(s) per 100 parts by weight of polyethylene(s); and
(ii) extruding the blend.

2. A particulate polyethylene blend comprising (i) one or more polyethylene(s), each polyethylene being made by a low pressure process and having a density equal to or greater than 0.918 gram per cubic centimeter, and (ii) one or more saturated alicyclic hydrocarbon(s), said hydrocarbon(s) being liquid at blending temperatures, non-polar, essentially amorphous, and containing less than 15 percent by weight paraffin wax, in an amount of from 0.5 to 15 parts by weight of hydrocarbon(s) per 100 parts by weight of polyethylene(s) wherein each polyethylene blend particle has a crystalline phase and an amorphous phase and the surface of each polyethylene blend particle is essentially free of said hydrocarbon(s).

3. A blend as claimed in claim 2 wherein the density of each polyethylene is equal to or greater than 0.940 gram per cubic centimeter.

4. A blend as claimed in claim 2 or claim 3 wherein the viscosity of the hydrocarbon(s) is in the range of from 200 to 1000 SUS at 100 degrees F and the molecular weight of the hydrocarbon(s) is in the range of from 200 to 5000.

5. A blend as claimed in any one of claims 2 to 4 wherein each polyethylene blend particle is multimodal.

6. A particulate polyethylene blend comprising (i) one or more polyethylene(s), each polyethylene being made by a low pressure process, in the gas phase, in one or more fluidized bed reactors, and having a density equal to or greater than 0.918 gram per cubic centimeter, and (ii) one or more saturated alicyclic hydrocarbon(s), said hydrocarbon(s) being liquid at blending temperatures, non-polar, essentially amorphous, and containing less than 15 percent by weight paraffin wax, in an amount of from 0.5 to 15 parts by weight of hydro-carbon(s) per 100 parts by weight of polyethylene(s) wherein each polyethylene blend particle has a crystalline phase and an amorphous phase and the surface of each polyethylene blend particle is essentially free of said hydrocarbon(s) with the following provisos:
(a) the viscosity of the hydrocarbon(s) is in the range of from 200 to 1000 SUS at 100 degrees F and the molecular weight of the hydrocarbon(s) is in the range of from 200 to 5000;
(b) each polyethylene blend particle is bimodal or trimodal; and, optionally,
(c) the hydrocarbon(s) are introduced into the polyethylene in the reactor.

7. A particulate homopolymer or copolymer, or blend of particulate homopolymers and or copolymers, of ethylene and, in the case of copolymers one or more comonomers having 3 to 12 carbon atoms, each polymer having the following characteristics:
(i) a density of at least 0.918 gram per cubic centimeter;
(ii) a flow index of from 0.5 to a melt index of 10, both in grams per 10 minutes;
(iii) a molecular weight in the range of from 30,000 to 1,000,000;
(iv) bimodal or trimodal;
(v) each polymer particle having a crystalline phase and an amorphous phase;
(vi) the surface of each polymer particle being essentially free of additives; and
(vii) on conversion to a film or blow molded product, exhibiting essentially no melt fracture.

8. A film or blow molded product exhibiting essentially no melt fracture consisting essentially of a particulate homopolymer or copolymer, or blend of particulate homopolymers and/or copolymers, of ethylene and, in the case of copolymers, one or more comonomers having 3 to 12 carbon atoms, each polymer having the following characteristics:
(i) a density of at least from 0.918 gram per cubic centimeter;
(ii) a flow index of from 0.5 to a melt index of 10, both in grams per 10 minutes;
(iii) bimodal or trimodal;
(iv) each original polymer particle having a crystalline phase and an amorphous phase; and
(v) the surface of each original polymer particle being essentially free of additives.

9. A particulate homopolymer or copolymer, or blend of particulate homopolymers and/or copolymers, of ethylene and, in the case of copolymers, one or more comonomers having 3 to 12 carbon atoms, each polymer having the following characteristics:
(i) a density of at least 0.918 gram per cubic centimeter;
(ii) a melt index of from 1 to 160 grams per 10 minutes;
(iii) a molecular weight in the range of from 20,000 to 100,000.
(iv) bimodal or trimodal;
(v) each polymer particle having a crystalline phase and an amorphous phase;
(vi) the surface of each polymer particle being essentially free of additives; and
(vii) on conversion to an injection molded product being capable of
(a) having the speed of fabrication increased by at least 10 percent and
(b) being down-gauged by at least 10 percent, both with essentially no loss in Gardner impact strength.

10. An injection molded product having been prepared by (i) increasing the speed of fabrication by at least 10 percent and (ii) down-gauging by at least 10 percent with essentially no loss in Gardner impact strength over a like injection molded product prepared without such increase in speed or down-gauging consisting essentially of a homopolymer or copolymer, or blend of homopolymers and/or co-polymers, of ethylene and, in the case of copolymers, one or more comonomers having 3 to 12 carbon atoms, each polymer having the following characteristics:
(i) a density of at least 0.918 gram per cubic centimeter;
(ii) a melt index in the range of from 1 to 160 grams per 10 minutes;
(iii) bimodal or trimodal;
(iv) each original polymer particle having a crystalline phase and an amorphous phase; and
(v) the surface of each original polymer particle being essentially free of additives.
